# EUROPEAN PATENT SPECIFICATION

(11) **EP 1 598 399 B1**
(45) Date of publication and mention of the grant of the patent: **31.10.2007**
(21) Application number: 05010636.8
(22) Date of filing: 17.05.2005
(51) Int. Cl.: C08L 67/02, C08L 67/00, C08J 5/18

(54) **Aliphatic polyester composition films and multilayer films produced therefrom**
Folien aus Zusammensetzungen von aliphatischen Polyestern und daraus hergestellte Mehrschichtfolien
Films à base de compositions de polyesters aliphatiques et films multicouches produits à partir de tels films

(30) Priority: 18.05.2004 JP 2004148022
(43) Date of publication of application: 23.11.2005
(73) Proprietor: Tohcello Co., Ltd., Tokyo 104-0031 (JP)
(72) Inventor: Wakaki, Hiroyuki, Sashima-gun Ibaraki-ken, 306-0213 (JP); Narita, Junichi, Sashima-gun Ibaraki-ken, 306-0213 (JP)
(74) Representative: HOFFMANN EITLE

(56) References cited:
- EP-A- 0 654 492
- EP-A- 0 750 015
- EP-A- 1 188 781
- EP-A- 1 348 541
- EP-A- 1 354 908
- WO-A-02/059199
- DE-A1- 10 104 829
- US-A- 4 070 417
- US-A1- 2002 198 332
- US-A1- 2003 204 028
- US-A1- 2004 058 174
- DATABASE WPI Section Ch, Week 199832 Derwent Publications Ltd., London, GB; Class A23, AN 1998-370524 XP002335758 & JP 10 146936 A (MITSUBISHI PLASTICS IND LTD) 2 June 1998 (1998-06-02)
- DATABASE WPI Section Ch, Week 200413 Derwent Publications Ltd., London, GB; Class A23, AN 2004-132752 XP002335810 -& WO 2004/005400 A1 (MITSUBISHI PLASTICS INC) 15 January 2004 (2004-01-15)
- DATABASE WPI Section Ch, Week 200433 Derwent Publications Ltd., London, GB; Class A14, AN 2004-350782 XP002335816 -& JP 2004 067894 A (UNITIKA LTD) 4 March 2004 (2004-03-04)

## Description

### BACKGROUND OF THE INVENTION

### 1. Field of the Invention:

The present invention relates to an aliphatic polyester composition, films and multilayer films produced therefrom, and more particularly, to a biodegradable aliphatic polyester composition suitable for making films for packaging use possessing transparency, impact-resistance and piercing-resistant property as well as films and multilayer films produced therefrom.

### 2. Description of the Prior Art:

From the past, biodegradable films have attracted public attention with a view to facilitating disposal treatment of plastic films, and as a result, various kinds of films have been developed hitherto. These biodegradable films undergo hydrolysis and/or biodegradation in soil or water, while gradually permitting decomposition and disintegration of the films, and finally these films are converted into harmless decomposition products by the aid of the microorganisms. Known as such films are those made of aromatic polyester resins, aliphatic polyester resins such as polylactic acid and polybutylene succinate, polyvinyl alcohol, cellulose acetate, and starch.

Aliphatic polyester resins such as polylactic acid and polybutylene succinate are known to have inferior physical properties. As a means for improving rigidity of these aliphatic polyester resins, there are proposed (a) an aliphatic polyester copolymer which is obtained by copolycondensing an aliphatic dicarboxylic acid component and an aliphatic dihydroxyl compound component both as aliphatic polyester components with an aliphatic hydroxycarboxylic acid component (for example, Patent Literature 1) and (b) an aliphatic polyester copolymer which is obtained by copolycondensing an aliphatic dicarboxylic acid component and an aliphatic dihydroxyl component both as aliphatic polyester components with an aliphatic hydroxycarboxylic acid component or a lactone thereof (for example, Patent Literature 2).

On the other hand, a method for adding polylactic acid to an aliphatic polyester copolymer is proposed for improving physical properties of such aliphatic polyester copolymer (for example, Patent Literatures 3 and 4).

According to a sort of the aliphatic polyester copolymers, however, it is still insufficient in flexibility and inferior in impact-resistance.
- Patent Literature 1:: JP-A-8-239461 (claim 1)
- Patent Literature 2:: JP-A-8-311181 (claim 1)
- Patent Literature 3:: JP-A-9-272789 (claim 1)
- Patent Literature 4:: WO 02/44249 A1 (pages 95)

### BRIEF SUMMARY OF THE INVENTION

Accordingly, it is an object of the present invention to provide a biodegradable aliphatic polyester composition excellent in transparency, impact-resistance and piercing-resistant property.

It is another object of the present invention to provide films suitable for packaging use which are made of the biodegradable aliphatic polyester composition.

It is still another object of the present invention to provide a multilayer film for packaging use made of the biodegradable aliphatic polyester composition, which carries on at least one layer thereof with a biodegradable polymer.

The present invention provides an aliphatic polyester composition which comprises 98~35% by weight of an aliphatic polyester copolymer (terpolycondensate) (A) having a melting point (Tm) of 80~120°C, a crystallizing temperature (Tc) of 35~75°C, and Δ (DELTA) = (Tₘ)-(T_{C}) (A value of the difference between Tₘ and T_{C}) being within the range of 35~55°C and comprised of (a1) an aliphatic or alicyclic dicarboxylic acid component, (a2) an aliphatic or alicyclic dihydroxyl compound component, and (a3) a difunctional aliphatic hydroxycarboxylic acid component; and 2~65% by weight of an aliphatic and aromatic polyester (B) (terpolycondensate) comprised of an acid component of 20~95 mol% of (b1) an aliphatic or alicyclic dicarboxylic acid component and 80~5 mol% of (b2) an aromatic carboxylic acid and (b3) an aliphatic and alicyclic dihydroxyl compound.

In accordance with one aspect of the embodiment, there is provided an aliphatic polyester composition wherein the content of (a3) difunctional aliphatic hydroxycarboxylic acid component in the aliphatic polyester copolymer (A) is within the range of 0.1~25 mol%, with the proviso that among (a1) aliphatic or alicyclic dicarboxylic acid component, the (a2) aliphatic or alicyclic dihydroxyl compound component and (a3) difunctional aliphatic hydroxycarboxylic acid component, the amounts of (a1) aliphatic or alicyclic dicarboxylic acid component and (a2) aliphatic or alicyclic dihydroxyl compound are substantially equal and a total of the amounts of (a1) aliphatic or alicyclic dicarboxylic acid component, the aliphatic or alicyclic dihydroxyl compound component and (a3) difunctional aliphatic hydroxycarboxylic acid component is 100 mol%.

In accordance with another aspect of the embodiment, there is provided the aliphatic polyester composition, wherein the difunctional aliphatic hydroxycarboxylic acid is polylactic acid.

In accordance with another embodiment of the present invention, there is provided a film made of the aliphatic polyester composition

In accordance with still another embodiment of the present invention, there is provided a multilayer film which comprises the aforesaid film multilayered on at least one surface thereof with a heat-sealable layer comprised of 95~10% by weight of the aliphatic polyester copolymer (A) and 5~90% by weight of a biodegradable polymer (C) having a melting point (Tₘ) of 45~80°C.

In accordance with one aspect of the just-above described embodiment, there is provided a multilayer film, wherein the biodegradable polymer (C) is a polylactone.

In accordance with another aspect of the just-above described embodiment, there is provided a multilayer film, wherein the aliphatic polyester copolymer constituting the biodegradable polymer composition has a melting point (Tₘ) of 80~95°C and lower than the melting point (Tₘ) of the aliphatic polyester copolymer (A) constituting the aliphatic polyester composition.

### DETAILED DESCRIPTION OF THE INVENTION

The present invention provides an aliphatic polyester composition suitable for a packaging film, which is superior in transparency, impact-strength and piercing-resistant property.

The present invention also provides a multilayer film, which is made by laminating a biodegradable polymer layer on at least one surface of a film substrate provided by this invention. The multilayer films are superior in transparency, impact-resistance and piercing resistant property, and also in low temperature heat-sealable property.

### Aliphatic polyester copolymer (A)

The aliphatic polyester copolymer (A) used in the present invention has a melting point (Tₘ) of 80~120°C, preferably 80~115°C and a crystallizing temperature (T_{C}) of 35∼75°C, preferably 37~73°C, Δ (DELTA) = (Tₘ)-(T_{C}) [the difference between the melting point and the crystallizing temperature, i.e. (Tₘ)-(T_{C})] being within the range of 30~55°C, preferably 35 ~ 50°C. This copolymer (A) is derived from the aliphatic or alicyclic dicarboxylic acid component (a1), the aliphatic or alicyclic dihydroxyl compound component (a2) and the difunctional aliphatic hydroxycarboxylic acid component (a3) by way of polycondensation.

The aliphatic polyester copolymer (A) having a melting point (Tₘ) of less than 80°C is too low to be used as film base. More precisely, if the copolymer is used as a packaging film, the film will be fused at the time of heat sealing and will adhere to a heat-seal bar, thus failing to meet packaging performance. On the other hand, if the aliphatic polyester copolymer has a melting point (Tₘ) exceeding 120°C, the amount of the difunctional aliphatic hydroxyl compound component (a3) will eventually be decreased so that there is a possibility that flexibility of the resultant film will be lost.

The aliphatic polyester copolymer (A) having a crystallizing temperature (Tc) of less than 35°C is too low to obtain a film. More precisely, the film is not completely solidified at an ordinary cooling temperature (5~30°C) so that a press mark by a nip roll or the like tend to be printed on the film. Further, the film may not readily be detached from cooling rolls so that the resultant film will be inferior in appearance.

The aliphatic polyester copolymer (A) having A (DELTA), (Tₘ)-(T_{C}), being less than 30°C tend to afford a film inferior in impact-resistance and piercing-resistant property.

The content of the difunctional aliphatic hydroxycarboxylic acid component (a3) in the aliphatic polyester copolymer (A) is within the range of preferably 0.1~25 mol%, more preferably 1~10 mol%, with the proviso that among the aliphatic or alicyclic dicarboxylic acid component (a1), the aliphatic or alicyclic dihydroxyl compound component (a2) and the difunctional aliphatic hydroxycarboxylic acid component (a3), the amounts of the aliphatic or alicyclic dicarboxylic acid component (a1) and the aliphatic or alicyclic dihydroxyl compound (a2) are substantially equal and the total of the amounts of the aliphatic or alicyclic dicarboxylic acid component (a1), the aliphatic or alicyclic dihydroxyl compound component (a2) and the difunctional aliphatic hydroxycarboxylic acid component (a3) is 100 mol%.

In case the aliphatic polyester composition of the present invention comprised of the aliphatic polyester copolymer (A) and the under-mentioned aliphatic and aromatic polyester (B) is used as a film base and in case the biodegradable resin composition comprised of the aliphatic polyester copolymer (A) and the under-mentioned biodegradable resin (C) is used as a heat sealable layer to form a multilayer film, the aliphatic polyester copolymer (A) used in the aliphatic polyester composition preferably has a melting point (Tₘ) of 90~120°C and the aliphatic polyester copolymer (A) used in the biodegradable resin composition preferably has a melting point (Tₘ) of 80~95°C, with the proviso that the melting point is lower than the melting point (Tₘ) of the aliphatic polyester copolymer (A) used in the aliphatic polyester composition so that the difference between the melting point of the film base obtained from the aliphatic polyester composition and the melting point of the heat-sealable layer obtained from the biodegradable resin composition becomes larger, thus obtaining a laminated film excellent in low temperature heat-sealability and pillow type package machine applicability.

No particular limitation exists in the melt flow rate (MFD) measured according to ASTM D-1238 (190°C, load 2160g) of the aliphatic polyester copolymer (A), so far as the copolymer has a film-forming capacity. Usually, however, the value of MFR is within the range of 1~100 g/10 min., preferably 0.2~50 g/10 min., and more preferably 0.5~20 g/min.

### (a1) Aliphatic or alicyclic dicarboxylic acid component

No particular limitation exists in (a1) the aliphatic or alicyclic dicarboxylic acid component constituting the aliphatic polyester copolymer (A). Usually, however, the aliphatic dicarboxylic acid component is a compound having 2~10 carbon atoms (including the carbon atoms in the carboxyl groups), preferably 4~6 carbon atoms. The compound may be linear or branched. In case of the alicyclic dicarboxylic acid component, however, the component has usually 7~10 carbon atoms, especially 8 carbon atoms.

So far as the aliphatic or alicyclic dicarboxylic acid component (a1) contains an aliphatic dicarboxylic acid having 2~10 carbon atoms as a predominant ingredient thereof, the component (a1) may contain the dicarboxylic acid component having a larger number of carbon atoms, for example, up to 30 carbon atoms..

Illustrative of such aliphatic or alicyclic dicarboxylic acid component (a1) are, for example, dicarboxylic acids such as oxalic acid, malonic acid, succinic acid, glutaric acid, adipic acid, pimelic acid, azelaic acid, sebacic acid, fumaric acid, 2,2-dimethylglutaric acid, suberic acid, 1,3-cyclopentanedicarboxylic acid, 1,4-cyclohexanedicarboxylic acid, 1,3-cyclohexanedicarboxylic acid, diglycolic acid, itaconic acid, maleic acid, and 2,5-norbornanedicaboxylic acid and ester derivatives of these dicarboxylic acids such as dimethyl ester, diethyl ester, dipropyl ester, diisopropyl ester, di-n-butyl ester, diisobutyl ester, di-*tert*-butyl ester, di-n-pentyl ester, diisopentyl ester, and di-n-hexyl ester.

These aliphatic or alicyclic dicarboxylic acids and ester derivatives thereof can be used singly or in mixture of at least two.

In particular, the aliphatic or alicyclic dicarboxylic acid component (a1) is preferably succinic acid, an alkyl ester thereof or a mixture thereof. In order to obtain the aliphatic polyester copolymer (A) having a low melting point (Tₘ), succinic acid may be used as a main component while using adipic acid as a subsidiary component.

### (a2) Aliphatic or alicyclic dihydroxyl compound component

No particular limitation exists in (a2) the aliphatic or a alicyclic dihydroxyl compound component constituting the aliphatic polyester copolymer (A). Usually, however, the aliphatic dihydroxyl compound component is a linear or branched dihydroxyl compound having 2~12 carbon atoms, preferably 4~6 carbon atoms while the alicyclic dihydroxyl compound component is a cyclic compound having 5~10 carbon atoms.

Illustrative of the aliphatic or alicyclic dihydroxyl compound component (a2) are, for example, diols or glycols such as ethylene glycol, 1,2-propanediol, 1,3-propanediol, 1,2-butanediol, 1,4-butanediol, 1,5-pentanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, and 2,2,4-trimethyl-1,6-hexanediol; polyoxyalkylene glycol such as diethylene glycol, triethylene glycol and polyoxyethylene glycol; and polytetrahdrofuran. Especially mentioned are ethylene glycol, 1,3-propanediol, 1,4-butanediol, 2,2-dimethyl-1,3-propanediol (neopentyl glycol), cyclopentanediol, 1,4-cyclohexanediol, 1,4-cyclohexanedimethanol, and 2,2,4,4-tetramethyl-1,3-cyclobutanediol. Also mentioned are diethylene glycol, triethylene glycol, polyethylene glycol, a mixture of these and a glycol having a different number of the ether unit. Further, a mixture of different aliphatic or alicyclic dihydroxyl compounds may also be used.

1,4-butanediol is preferable as (a2) aliphatic or alicyclic dihydroxyl compound component.

### (a3) Difunctional aliphatic hydroxycarboxylic acid component

No particular limitation exists in (a3) the difunctional aliphatic hydroxycarboxylic acid component constituting the aliphatic polyester copolymer (A). Usually, however, (a3) the difunctional aliphatic hydroxycarboxylic acid copolymer is a compound having linear or branched bivalent aliphatic group having 1~10 carbon atoms.

Illustrative of such difunctional aliphatic hydroxycarboxylic acid component (a3) are, for example, glycolic acid, L-lactic acid, D-lactic acid, D,L-lactic acid, 2-methyllactic acid, 3-hydroxybuturic acid, 4-hydroxybuturic acid, 2-hydroxy-n-butyric acid, 2-hydroxy-3,3-dimethylbutyric acid, 2-hydroxy-2-methylbutyric acid, 2-hydroxy-3-methylbutyric acid, hydroxypivalic acid, hydroxyisocaproic acid, and hydroxycaproic acid as well as ester derivatives of these hydroxycarboxylic acids such as methyl ester, ethyl ester, propyl ester, butyl ester, and cyclohexyl ester.

The aliphatic polyester copolymer (A) used in the present invention can be prepared according to various known polycondensation processes. More precisely, the processes are disclosed, for example, in JP-A-8-239461 (corres. to EP-A-792901) and JP-A-9-272789. A part of the aliphatic and aromatic polyester copolymers are commercially available from MITSUBISHI CHEMICAL CORPORATION (Japan) under the trade name of GS Pla.

### Aliphatic and aromatic polyester (B)

The aliphatic and aromatic polyester (B) used in the present invention is a polyester derived from acid components, i.e. 20~95 mol%, preferably 30~70 mol% and more preferably 40~60 mol% of the aliphatic and aromatic dicarboxylic acid component (b1) and 80~5 mol%, preferably 70~30 mol% and more preferably 60~40 mol% of the aromatic dicarboxylic acid component (b2) and the aliphatic and alicyclic dihydroxyl compound component (b3). In this case, the mol number of the aliphatic and alicyclic dihydroxyl compound component (b3) is substantially equal to a total mol number of the aliphatic and aromatic dicarboxylic acid component (b1) and the aromatic dicarboxylic acid component (b2). Further, a connecting group represented by an isocyanate group may be involved to increase the molecular weight of the resultant aliphatic and aromatic polyester (B).

The aliphatic and aromatic polyester (B) preferably has a melting point of 50~190°C, more preferably 60~180°C, and especially preferably 70~170°C. No particular limitation exists in the melt flow rate (MFR) measured according to ASTM D-1238(190°C,load 2160 g) of the aliphatic and aromatic polyester (B), so far as the polyester has a film-forming capacity. Usually, however, the value of MFR is within the range of 0.1~100 g/10 min., preferably 0.2 ~50 g/10 min., and more preferably 0.5~20 g/10 min.

### (b1) Aliphatic or aromatic dicarboxylic acid component

No particular limitation exists in (b1) the aliphatic or aromatic dicarboxylic acid component constituting the aliphatic and aromatic polyester (B). Usually, however, the aliphatic dicarboxylic acid component is a compound having 2~10 carbon atoms (including the carbon atoms in the carboxyl groups), preferably 4~6 carbon atoms. The compound may be linear or branched. In case of the alicyclic dicarboxylic acid component, however, the component has usually 7~10 carbon atoms, especially 8 carbon atoms.

So far as the aliphatic or alicyclic dicarboxylic acid component (b1) contains an aliphatic dicarboxylic acid having 2~10 carbon atoms as a predominant ingredient thereof, the component (b1) may contain the dicarboxylic acid component having a larger number of carbon atoms, for example, up to 30 carbon atoms.

Illustrative of such aliphatic or alicyclic dicarboxylic acid component (b1) are, for example, dicarboxylic acids such as oxalic acid, malonic acid, succinic acid, glutaric acid, adipic acid, pimelic acid, azelaic acid, sebacic acid, fumaric acid, 2,2-dimethylglutaric acid, suberic acid, 1,3-cyclopentanedicarboxylic acid, 1,4-cyclohexanedicarboxylic acid, 1,3-cyclohexanedicarboxylic acid, diglycolic acid, itaconic acid, maleic acid, and 2,5-norbomanedicaboxylic acid and ester derivatives of these dicarboxylic acids such as dimethyl ester, diethyl ester, dipropyl ester, diisopropyl ester, di-n-butyl ester, diisobutyl ester, di-*tert*-butyl ester, di-n-pentyl ester, diisopentyl ester, and di-n-hexyl ester.

These aliphatic or alicyclic dicarboxylic acids and ester derivatives thereof can be used singly or in mixture of at least two.

In particular, (b1) the aliphatic or alicyclic dicarboxylic acid component is preferably adipic acid, an alkyl ester thereof or a mixture thereof.

(b1) the aliphatic or alicyclic dicarboxylic acid component in the acid component of the aliphatic and aromatic polyester (B) is within the range of 20~95 mol%, preferably 30~70 mol% and more preferably 40~60 mol%. (b1) aliphatic or alicyclic dicarboxylic acid component enhances hydrolyzing property and biodegradability of the aliphatic and aromatic polyester (B) and makes the resultant film flexible.

### (b2) Aromatic dicarboxylic acid component

No particular limitation exists in (b2) the aromatic dicarboxylic acid component constituting the aliphatic and aromatic polyester (B). Usually, however, the dicarboxylic acid component is a compound having 8~12 carbon atoms, especially 8 carbon atoms.

Illustrative of (b2) the aromatic dicarboxylic acid component are, for example, terephthalic acid, isophthalic acid, 2,6-naphthoic acid, 1,5-naphthoic acid and ester derivatives thereof. Examples of the ester derivatives of the aromatic dicarboxylic acid include, for example, di-C₁~C₆ alkyl esters of the aromatic dicarboxylic acid, such as dimethyl ester, diethyl ester, di-n-propyl ester, diisopropyl ester, di-n-butyl ester, diisobutyl ester, di-*tert*-butyl ester, di-n-pentyl ester, diisopentyl ester, and di-n-hexyl ester.

These aromatic dicarboxylic acid and/or ester derivatives thereof may be used singly or in mixture of at least two.

(b2) The aromatic dicarboxylic acid component is preferably terephthalic acid, dimethyl terephthalate and a mixture thereof.

(b2) The aromatic dicarboxylic acid component as acid component in the aliphatic and aromatic polyester (B) is within the range of 80~5 mol%, preferably 7~30 mol% and more preferably 60~40 mol%. The aliphatic and aromatic polyester (B) affords a flexible polyester while maintaining heat-resisting property by copolymerization, i.e. copolycondensation with (b2) the aromatic dicarboxylic acid component.

### (b3) Aliphatic or alicyclic dihydroxyl compound component

No particular limitation exists in (b3) the aliphatic or alicyclic dihydroxyl compound component constituting the aromatic polyester (B). Usually, however, the aliphatic dihydroxyl compound component is a linear or branched dihydroxyl compound having 2~12 carbon atoms, preferably4~6 carbon atoms, while the alicyclic dihydroxyl compound component is a cyclic compound having 5*~*10 carbon atoms.

Illustrative of such aliphatic or alicyclic dihydroxyl compound component (b3) are, for example, diols or glycols such as ethylene glycol, 1,2-propanediol, 1,3-propanediol, 1,2-butanediol, 1,4-butanediol, 1,5-pentanediol, 2,4-dimethyl-2-ethylhexane-1,3-diol, 2,2-dimethyl-1,3-propanediol, 2-ethyl-2-butyl-1,3-propanediol, 2-ethyl-2-isobutyl-1,3-propanediol, and 2,2,4-trimethyl-1,6-hexanediol; polyoxyalkylene glycol such as diethylene glycol, triethylene glycol and polyoxyethylene glycol; and polytetrahdrofuran. Especially mentioned are ethylene glycol, 1,3-propanediol, 1,4-butanediol, 2,2-dimethyl-1,3-propanediol (neopentyl glycol), cyclopentanediol, 1,4-cyclohexanediol, 1,4-cyclohexanedimethanol, and 2,2,4,4-tetramethyl-1,3-cyclobutanediol. Also mentioned are diethylene glycol, triethylene glycol, polyethylene glycol, a mixture of these and a glycol having a different number of the ether unit. Further, a mixture of different aliphatic or alicyclic dihydroxyl compounds may also be used.

The aliphatic and aromatic polyester (B) used in the present invention can be prepared in variety of known processes. More precisely, the process is disclosed in JP-A-2002-527644 (corres. to WO 98/12245), JP-A-2001-501652 (corres. to U.S. 6,103,858). A part of the aliphatic and aromatic polyesters (B) used in the present invention is commercially available from BASF AGmH) under the trade name of ECOFLEX.

### Biodegradable polymer (C)

The biodegradable polymer (C) used in the present invention is a polymer having a melting point (Tₘ) of 45~80°C, preferably 55~75°C. Illustrative of the biodegradable polymer are, for example, a polylactone obtained by polymerizing one or more of the lactone such as ε-caprolactone, δ-valerolactone, β-methyl-δ-valerolactone, etc.; a lactone copolymer obtained by copolymerizing such lactone with a aliphatic hydroxycarboxylic acid such as glycolic acid, lactic acid; and an aliphatic polyester such as polybutylene adipate, polyethylene adipate or polyhexamethylene oxalate. Among these biodegradable polymers, polylactones such as poly-ε-caprolactone and poly-δ-valerolactone are especially preferable.

The melt flow rate (MFR: measured in accordance with ASTM D-4238 at 190°C, load 2160 g) of the polylactone is not especially limited so far as the polylactone has a film-forming capacity. Usually, however, the melt for rate is within the range of 0.2~50 g/10 min., preferably 0.2~50 g/10 min. and more preferably 0.5~20 g/10 min.

### Aliphatic polyester composition

The aliphatic polyester composition comprises 98~35% by weight, preferably 95~40% by weight of the aliphatic polyester copolymer (A) and 2~65% by weight, preferably 5~60% by weight of the aliphatic and aromatic polyester (B).

The composition wherein the content of the aliphatic and aromatic polyester (B) is less than 2% by weight may not enhance the impact-resistance, etc. of the resultant film. On the other hand, the composition wherein the aforesaid content exceeds 65% by weight, may deteriorate the impact-resistance and piercing-resistant destruction energy of the resultant film.

Among these aliphatic polyester composition, those comprising 98~65% by weight of the aliphatic polyester copolymer (A) and 2~35% by weight of the aliphatic and aromatic polyester (B) is preferable since the resultant film will become excellent in both impact-resistance and piercing-resistant destruction energy.

The aliphatic polyester composition of the present invention may be incorporated, if necessary, with usually utilizable additives such as an anti-oxidant, a weathering stabilizer, an anti-static agent, a haze-preventing agent, an adhesion-imparting agent, an anti-blocking agent, a slipping agent, a photostabilizer, a UV-absorbing agent, a fluorescent brightening agent, a bactericide, a nucleus agent, and an inorganic or organic filler, within the extent where the object of the present invention is not damaged, in the aliphatic polyester copolymer (A) *per se,* or in each of the aliphatic polyester composition (A) and the aliphatic and aromatic polyester (B) or at the time of preparing the composition.

### Biodegradable polymer composition

The biodegradable polymer composition used in the present invention comprises 95~10% by weight, preferably 90~70% by weight of the aliphatic polyester composition (A) and 5~90% by weight, preferably 10~30% by weight of the biodegradable polymer (C).

The use of the aliphatic polyester copolymer (A) employed in the biodegradable polymer composition having a melting point (Tₘ) of 80~95°C, preferably 80~90°C is preferable since the copolymer can afford a laminated film excellent in low temperature heat-sealable property when laminated with the film of the aliphatic polyester composition (A).

If the composition (C) contains less than 5% by weight of the biodegradable polymer, the resultant laminated film will not be improved in low temperature heat-scalable property. On the other hand, if the composition contains the biodegradable polymer in an amount exceeding 90% by weight, the composition will become too low in melting point so that the composition is inferior in film-forming capacity and the resultant laminated film will undergo blocking.

The biodegradable polymer composition may be incorporated, if necessary, with usually utilizable additives such as an antioxidant, a weathering stabilizer, an anti-static agent, a haze-preventing agent, an adhesion-imparting agent, an anti-blocking agent, a slipping agent, a photostabilizer, a UV-absorbing agent, a fluorescent brightening agent, a bactericide, a nucleus agent, and an inorganic and/or organic compound filler, within the extent where the object of the present invention is not damaged, in the biodegradable polymer composition *per se*, or in each of the aliphatic polyester copolymer (A) and the biodegradable polymer (C) or at the time of preparing the composition.

### Film

The film of the present invention is manufactured from the aliphatic polyester composition comprising 98~35% by weight, preferably 95~40% by weight of the aliphatic polyester copolymer (A) and 2~65% by weight, preferably 5~60% by weight of the aliphatic and aromatic polyester (B).

The film of the composition containing less than 2% by weight of the aliphatic and aromatic polyester (B) may not be improved in impact-resistance, etc. On the other hand, the film of the composition containing the polyester (B) in an amount exceeding 65% by weight may be deteriorated in impact-resistance and piercing-resistant destruction energy, etc.

As described above, the aliphatic polyester copolymer (A) in the aliphatic polyester composition used for the film has a melting point (Tₘ) of 80~120°C, preferably 80~115°C, a crystallizing temperature (Tc) of 35~75°C, preferably 37~73°C, and Δ (DELTA) = (Tₘ)-(T_{C}) (a value of difference between Tₘ and T_{C}) of 30~55°C, preferably 35~50°C. In other words, it is necessary that the aliphatic polyester copolymer (A) is low (slow in crystallization) in crystallization temperature (at the time of cooling). For example, even if the aliphatic polyester copolymer has a melting point (Tₘ) within the above range, the use of the copolymer having a higher crystallizing temperature (Tₘ) of 76~80°C (higher in crystallization) and Δ (DELTA) = (Tₘ)-(T_{C}) (a value of the difference between Tₘ and Tc) of 26~29°C (less than 30°C) tends to be inferior in piercing-resistant destruction energy so that the resultant film may be broken at the time of transportation according to the shape of the film.

The thickness of the film of the present invention can be selected according to the intended use, but usually, the thickness is within the range of 10~200 µm, preferably 20~200 µm.

At least one side of the film of the present invention may be subjected, for example, to a surface treatment such as corona treatment, flame treatment, plasma treatment, and undercoating treatment, with a view to improving printing performance, adhesion, and lubrication of the film.

According to the intended use of the film, one side of the film may be combined with the under-mentioned substratum layer.

The film of the present invention can be manufactured according to a variety of known methods. Mentioned, for example, is a method wherein the aliphatic polyester copolymer (A) and the aliphatic and aromatic polyester (B) are mixed in a given proportion and directly charged into a fihn-forming machine provided with a T-die and a circular die for making films. Or alternatively, the aliphatic polyester copolymer (A) and the aliphatic and aromatic polyester (B) are mixed in a predetermined proportion, and the mixture is kneaded under heating and extruded through an extruder provided with a T-die or a circular die for making films.

### Multilayer film

The multilayer film of the present invention comprises a film substrate of the aliphatic polyester composition laminated on at least one surface of the film substrate with a heat-sealable layer of the biodegradable polymer composition comprised of the aliphatic polyester copolymer (A) and the biodegradable polymer (C).

As described above, the aliphatic polyester copolymer (A) used in the aliphatic polyester composition (the film substrate) has a melting point (Tₘ) of 90~110°C, while the aliphatic polyester copolymer (A) used in the biodegradable resin composition (the heat-sealable layer) has a melting point (Tₘ) of 80~95°C, with the proviso that the aliphatic polyester copolymer (A) used in the biodegradable resin composition (the heat-sealable layer) has a lower melting point (Tₘ) than that of the aliphatic polyester copolymer (A) used in the aliphatic polyester composition (the film substrate). The multilayer film excellent in low temperature heat-sealable property can thereby be obtained.

The thickness of the multilayer film of the present invention can be selected according to the intended use, but usually, the thickness of the film comprising the aliphatic polyester composition is within the range of 10~200 µm, preferably 20~100 µm, while the thickness of the heat-sealable layer of the biodegradable polymer composition comprising the aliphatic polyester copolymer (A) and the biodegradable polymer (C) is within the range of 2~100 µm, preferably 5~50 µm.

At least one side of the laminated film of the present invention may be subjected, for example, to a surface treatment such as corona treatment, flame treatment, plasma treatment, and undercoating treatment, with a view to improving printing performance, adhesion, and lubrication of the film.

According to the intended use of the film, one side of the film may be combined with the under-mentioned substratum layer.

The multilayer film of the present invention can be manufactured according to a variety of the known methods. Mentioned, for example, are a method wherein (a) a film substrate comprised of the aliphatic polyester copolymer (A) and the aliphatic and aromatic polyester (B) and (b) the aliphatic polyester copolymer (A) and biodegradable polymer (C) are mixed, respectively, in a given proportion and the mixture is directly charged into a film-forming machine provided with a multilayer die for at least two layers and thereafter the contents are subjected to coextrusion molding to form a multilayer film and a method wherein (a) the aliphatic polyester copolymer (A) and the aliphatic and aromatic polyester (B) and (b) the aliphatic polyester copolymer and the biodegradable polymer (B) are previously mixed, respectively, in a given proportion and the mixture is melt-kneaded to form (c) the aliphatic polyester composition and (d) the biodegradable resin composition and thereafter the mixture is charged into a film-forming machine provided with a multilayer die for at least two layers and subjected to coextrusion molding to form a laminated film. Or alternatively, (c) the aliphatic polyester composition and (d) the biodegradable resin composition are separately produced and the compositions are formed separately to form films and thereafter the films are laminated.

### Substratum layer

The substratum layer of the present invention, which is used as combined with the film of the aliphatic polyester composition or the laminated film is usually various materials utilized as packaging materials, glass, metal, aluminum foil, paper and the like. Examples of the packaging materials include films, sheet, cup, tray and foam of a polyolefin, such as polyethylene, polypropylene, polybutene, and polymethylpentene; a polyester such as polyethylene terephthalate, polycarbonate, an aliphatic polyester, an aromatic polyester and unsaturated polyester; polyamide such as nylon; polyvinyl compounds such as polystyrene, polyvinyl chloride, polyvinyl alcohol, ethylene-vinyl alcohol copolymer and ethylene-vinyl acetate copolymer; a polyacrylate such as poly(methyl acrylate) and poly(methyl methacrylate); a biodegradable polyester such as polylactic acid and a sulfonate group-containing aromatic polyester; a thermoplastic resin such as a thermoplastic polyurethane; and a thermocurable resin such as thermocurable polyurethane, phenol resin, urea resin, melamine resin, epoxy resin, diallyl phthalate resin, a silicone resin, and polyimide resin. In case a film made of a thermoplastic resin is used as the substratum layer, the film may be non-stretched or uniaxially or biaxially stretched. It is a matter of course that the substratum layer may be a single layer or multilayer of at least two layers.

### EXAMPLES

The present invention will be illustrated in more detail by way of Examples and Comparative Examples, but it is to be construed that the present invention is not limited by these Examples.

The following polyesters are used in these Examples and Comparative Examples:
(A) The aliphatic polyester copolymer (A):
   (1) Polyester copolymer (A-1) of succinic acid, 1,4-butanediol and lactic acid Prepared by MITSUBISHI CEHEMICAL CORPORATION, (Japan), Trade name: GS-Pla AZ91T MFR (190°C, load: 2160 g) 4.5 g/10 min.; Melting point (Tₘ): 208.9°C; Crystallizing temperature (T_{C}): 68.0°C; (Tₘ)-(T_{C}): 40.9°C; Density: 1.25 g/cm³;
   (2) Polyester copolymer (A-2) of adipic acid, 1,4-butanediol and lactic acid Prepared by MITSUBISHI CEHEMICAL CORPORATION, (Japan), Trade name: GS-Pla AD92W MFR (190°C, load: 2160 g) 4.5 g/10 min.; Melting point (Tₘ): 86.9°C; Crystallizing temperature (T_{C}): 40.4°C; (Tₘ)-(T_{C}): 46.5°C; Density: 1.25 g/cm³;
(B) The aliphatic and aromatic polyester (B):
   (1) Polyester copolymer (B-1) of Adipic acid, terephthalic acid and 1,4-butanediol Terephthalic acid: 46 mol%, adipic acid: 54 mol%, and 1,4-butanediol 100 mol/% Prepared by BASF AGmH (Germany), Trade name: ECOFLEX MFR (190°C, load: 2160 g) 3g/10 min.; Melting point (Tₘ): 112°C; Density: 1.26 g/cm³;
(C) Biodegradable polymer (C):
   (1) Poly(ε-caprolactone) (C-1)
      Prepared by Daicel Chemical Industries, Ltd. (Japan), Trade name: PH7; MFR (190°C, load: 2160 g) 2.0 g/10 min. Melting point (Tₘ): 60°C.

In the present invention, the methods for measuring the various properties are as follows:
(1) Haze (HZ) and Parallel light transmittance:
   Using a Haze meter (Model: 300) manufactured by NIPPON DENSHOKU INDUSTRIES Co., LTD. (Japan), haze (HZ: %) and parallel light transmittance (PT: %) of film samples were measured. Each value was an averaged number of those obtained by repeated five tests.
(2) Tensile test:
   Test pieces in the form of a strip (length: 150 mm; width: 15 mm) were cut out in vertical direction (MD) and in lateral direction (TD) from a film and used for the test. Using a tensile tester (Tensilon universal tester manufactured by ORIENTEC CO., LTD. Japan, Model No. RTC-1225), a tensile test was carried out under the testing conditions of chuck distance: 1000 mm and a cross-head speed of 300 mm/min. (in case of measuring Young s modulus of elasticity, however, 5 mm/min.) to obtain strength (MPa), elongation (%) and Young s modulus of elasticity (MPa) of the test pieces at yield point and fracture point. The amount of change in the chuck distance (%) was deemed as change in the elongation. Each value was an averaged number of those obtained by repeated five tests.
(3) Piercing test:
   A film strip having a length of 80 mm and a width of 60 mm was cut out from a film to prepare a test sample. The sample was pinched with two circular metal plates provided on either one of the surfaces with a rubber ring lest the sample should be detached and with a hole having a diameter of 25 mm in the central part thereof. Using a tensile tester (Tensilon universal tester Model RTC-1225), a needle having a semispherical tip of a diameter of 1 mm was pierced in vertical direction to the central part on one surface of the test sample at a velocity of 50 mm/min. to obtain fracture point load (N) and fracture point elongation (mm) while measuring the area (weight) surrounded by the resultant stress-strain curve line to obtain the energy needed for destruction by piercing (piercing-resistant destruction energy: mJ).
(4) Impact test:
   A square film piece having a length of 90 mm and a width of 90 mm was cut out as a test sample from a film. Using a film impact tester (manufactured by TOKYO SEIKI, LTD, Japan) to which an impact head having a semispherical diameter of 0.5 inch was mounted, the test sample placed on a hole having a diameter of 2 inches and fixed in downwardly pinched fashion with a cylinder having a diameter of 2 inches, and thereafter impact test was carried out to obtain impact strength (mJ).
(5) Heat-seal strength:
   For a single layer film, a biaxially stretched polylactic acid film (stretch ratio: 3.0 x 3.0, thickness: 25 µm) and a polyurethane binder (trade name: Takelac A310, marketed by Mitsui Takeda Chemicals, Inc., Japan, 60% + Takelac A8, 5% + ethyl acetate 35%) were used to laminate the single layer film with the biaxially stretched film thereby forming a laminated film having a thickness of 57~58 µm for measurement.

Using a HEATSEALTESTER Model TP-701-B manufactured by Tester Sangyo Co., Japan, the two laminated films were overlapped in face-to-face fashion, and heat-sealed at a given temperature under sealed surface pressure of 1 kg/cm² for a period of one second. By the way, the above heating operation was carried out only on the upper side of the film.

A test sample having a width of 15 mm was cut out from the heat-sealed laminated film. Using a tensile tester (Tensilon universal tester RTC-1225), the laminated film was peeled off at a tensile velocity of 300 mm/min. with the initial chuck distance of 20 mm whereby the maximum strength was obtained as heat-seal strength.

In case of a multilayer film at the outset, the films were overlapped in such manner that the heat-sealed layers were faced each other, and heat-sealed by the aid of a HEATSEALTESTER Model TP-701-B at a given temperature under sealed surface pressure of 1 kg/cm² for a period of one second. By the way, the above heating operation was carried out only on the upper side of the film.

A test sample having a width of 15 mm was cut out from the heat-sealed laminated film. Using a tensile tester (Tensilon universal tester RTC-1225), the laminated film was peeled off at a tensile velocity of 300 mm/min. whereby the maximum strength was obtained as heat-seal strength.

### Examples 1~6

### <Preparation of the aliphatic polyester composition>

An aliphatic polyester copolymer (A-1) derived from succinic acid, 1,4-butanediol and lactic acid an aliphatic, and an aromatic polyester (B-1) derived from adipic acid, terephthalic acid and 1,4-butanediol were respectively weighed at the proportion ratio as shown in Table 1-a. The polyester copolymer (A-1) and the polyester copolymer (B-1) were subjected to melt-kneading at 200°C by the aid of a uniaxial extruder of 40 mmφ to prepare the aliphatic polyester composition comprising (A-1) and (B-1).

### <Preparation of film (single layer film)>

Using a uniaxial extruder of 40 mmφ provided with a T-die having a lip width of 300 mm, the aliphatic polyester composition was subjected to extruding to obtain a film under the following conditions: a cylinder temperature 180~200°C, a die temperature 220°C, a chill roll temperature 15°C, a screw rotation 40 rpm, and a take-up velocity 13 m/min.

The resultant film was evaluated for its physical properties according to the aforesaid measuring methods. A result of evaluation of the resultant film is shown in Table 1-a.

### Comparative Example 1

An operation was carried out in the same manner as in Example 1 to obtain a film except that the polyester copolymer (A-1) derived from succinic acid, 1,4-butanediol and lactic acid alone was used.

The result of evaluation of the film obtained is shown in Table 1-b.

### Comparative Example 2

An operation was carried out in the same manner as in Example 1 to obtain a film except that the polyester copolymer (A-1) derived from succinic acid, 1,4-butandiol and lactic acid and the polyester copolymer (B-1) derived from adipic acid, terephthalic acid and 1,4-butanediol were melt-kneaded in a weight ratio of 30/70.

The result of evaluation of the film obtained is shown in Table 1-b.

### Comparative Example 3

An operation was carried out in the same manner as in Example 1 to obtain a film except that the polyester copolymer (A-1) derived from succinic acid, 1,4-butanediol and lactic acid and the polyester copolymer (B-1) derived from adipic acid, terephthalic acid and 1,4-butanediol were melt-kneaded in a weight ratio of 20:80.

The result of evaluation of the film obtained is shown in Table 1-b.

### Comparative Example 4

An operation was carried out in the same manner as in Example 1 to obtain a film except that the copolymer (B-1) derived from adipic acid, terephthalic acid and 1,4-butancdiol alone was used.

The result of evaluation of the film obtained is shown in Table 1-b..

It is evident from Tables 1-a and 1-b that addition of the aliphatic and aromatic polyester (B) to the aliphatic polyester copolymer (A) is effective to obtain a film remarkably improved in impact-strength (impact energy). On the other hand, it is also evident that the piercing-resistant destruction energy of the film is deteriorated as the amount of the aliphatic and aromatic polyester becomes larger.

The films obtained from the aliphatic polyester composition (Examples 1 ~ 6) containing the aliphatic and aromatic polyester (B) in an amount within the range as defined in the claims of the present invention (2~65% by weight) is excellent in impact energy (at least 371 mJ) as compared with the film comprising the aliphatic polyester copolymer (A) alone (Comparative Example 1). In addition, the films of Examples 1~6 has a piercing resistant destruction energy of at least 4 mJ.

In particular, the films obtained from the aliphatic polyester composition containing the aliphatic and aromatic polyester (B) in amount within the range of 5~35%by weight (Examples 1~3) are excellent remarkably in impact energy (at least 479 mJ) and in impact-resisting strength (piercing-resistant destruction energy: at least 5.6mJ).

In contrast, the film obtained from the aliphatic polyester composition containing the aliphatic and aromatic polyester (B) in amount exceeding 65% by weight (Comparative Example 2~3) and the film obtained from the aliphatic and aromatic polyester (B) alone (Comparative Example 4) is inferior in impact energy and piercing-resistant destruction energy so that these films are inferior in impact resistance.

### Examples 7 and 8 and Comparative Example 5

### <Preparation of the aliphatic polyester composition for substratum layer>

The polyester copolymer (A-1) derived from succinic acid, 1,4-butanediol and lactic acid and the polyester copolymer (B-1) derived from adipic acid, terephthalic acid and 1,4-butanediol both utilizable as the substratum layer of the multilayer film were respectively weighed in a proportion as shown in Table 2 and the mixture was subjected to melt-kneading at 200°C by the aid of a uniaxial extruder having 40 mmϕ to obtain an aliphatic composition.

### <Preparation of the biodegradable polymer composition for the heat-scalable layer>

The polyester copolymer (A-2) derived from succinic acid, adipic acid, 1,4-butandiol and lactic acid and the poly(ε-caprolactone) (C-1) both utilizable as the heat-scalable layer of the multilayer film were respectively weighed in a proportion as shown in Table 2 and the mixture was subjected to melt-kneading at 200°C by the aid of a uniaxial extruder having 400 mmφ to obtain a biodegradable polymer composition.

### <:Production of the multilayer film>

Using a multilayer film molding machine provided with two uniaxial extruders of 400 mmφ provided at the tip thereof with a lip having a T-die (multilayer die) of 300 mm, the aliphatic polyester composition and the biodegradable polymer composition were coextruded for molding to obtain a two-layer film under the following conditions: a die temperature: 220°C; a chill roll temperature: 15°C; a cylinder temperature in the extruder for the substratum layer: 180~200°C; a rotation velocity of the screw: 20 rpm; a cylinder temperature in the extruder for the heat-sealable layer: 180~200°C; a rotation velocity of the screw: 30 rpm; a take-up velocity: 20 m/min.; and the thickness ratio of the substratum layer to the heat-sealable layer: 40/60.

The result of evaluation of the multilayer film obtained is shown in Table 2.

It is evident from Table 2 that a multilayer film (Example 7 or 8) having the beat-sealable layer comprising the aliphatic polyester copolymer (A) and poly(ε-caprolactone) (C) in addition to the substratum layer is excellent in low temperature heat-sealable property. In contrast, it is evident that a multilayer film having the aliphatic polyester copolymer (A) alone as the heat-scalable layer (Comparative Example 5) is apparently inferior in low temperature heat-sealable property.

In Tables 1-a, 1-b and 2, the abbreviations newly given therein have the following meanings:
- Com.:: Comparative
- Str:: strength
- Frac.:: fracture
- Elong.:: elongation
- Piercing-resist.:: piercing-resisting
- Destruct.:: destruction
- Temp.:: temperature

### INDUSTRIAL APPLICABILITY

According to a embodiment of the present invention, a film possessing biodegradable property in addition to good physical properties such as transparency, flexibility, impact-resistance and piercing resistant property and being thus utilizable for wrapping or packaging use, especially suitable for automatic packaging machines can be obtained from the aliphatic polyester composition of the present invention.

A multilayer film in another embodiment of the present invention comprises the film of the aforesaid embodiment as substratum layer and on at least one surface thereof the biodegradable resin composition layer possesses biodegradable property and excellent low temperature heat-sealable property in addition to transparency, impact-resistance, and piercing-resistant property. Accordingly, the multilayer film of the present invention can suitably be used in variety of the fields such as films for packaging machines of pillow type package, two-sided seal or three-sided seal, and films for overlapping package machines.

**Table 1-a**

| | | | Example 1 | Example 2 | Example 3 | Example 4 | Example 5 | Example 6 |
|---|---|---|---|---|---|---|---|---|
| Polyester (A-1) | | (% by wt.) | 90 | 80 | 70 | 60 | 50 | 40 |
| Polyester (B-1) | | (% by wt.) | 10 | 20 | 30 | 40 | 50 | 60 |
| Physical properties of Film | | | | | | | | |
| Thickness | | (µm) | 31 | 33 | 32 | 34 | 34 | 33 |
| HZ | | (%) | 16 | 19 | 21 | 20 | 20 | 19 |
| PT | | (%) | 76 | 72 | 69 | 70 | 69 | 70 |
| Tensile Test | | | | | | | | |
| MD | Yield point Str. | (MPa) | 32 | 26 | 23 | 21 | 19 | 18 |
| | Yield point Elong | (%) | 20 | 18 | 18 | 19 | 20 | 19 |
| | Frac. point Str. | (MPa) | 42 | 35 | 33 | 29 | 24 | 21 |
| | Frac. point Elong | (%) | 157 | 182 | 212 | 209 | 212 | 241 |
| | Young s Modulus | (MPa) | 457 | 367 | 337 | 287 | 261 | 251 |
| TD | Yield point Str. | (MPa) | 24 | 22 | 20 | 17 | 16 | 14 |
| | Yield point Elong | (%) | 7 | 9 | 10 | 11 | 13 | 13 |
| | Frac. point Str. | (MPa) | 14 | 14 | 14 | 15 | 14 | 14 |
| | Frac. point Elong | (%) | 38 | 60 | 131 | 12 | 306 | 301 |
| | Young s Modulus | (MPa) | 609 | 477 | 407 | 350 | 292 | 241 |
| Piercing Test | | | | | | | | |
| Fracture point | load | (N) | 1.8 | 1.7 | 1.6 | 1.4 | 1.3 | 1.4 |
| Fracture point | Elongation | (mm) | 5.0 | 5.3 | 5.3 | 5.2 | 5.1 | 6.1 |
| Piercing-resist. | destruct. energy | (mJ) | 6..8 | 6..8 | 5.6 | 5.3 | 4.3 | 4.1 |
| Impact | strength | (mJ) | 555 | 486 | 479 | 371 | 423 | 463 |
| Heat-seal Strength | Heat-seal temp. (°C) | | | | | | | |
| | 80 | (N/15 mm) | 0.0 | 0.0 | 0.0 | 0.0 | 0.0 | 0.0 |
| | 85 | | 0.0 | 0.0 | 0.0 | 0.0 | 0.1 | 0.0 |
| | 90 | | 0.0 | 0.1 | 0.1 | 0.1 | 0.1 | 0.1 |
| | 95 | | 0.1 | 0.3 | 0.5 | 0.5 | 0.4 | 0.4 |
| | 100 | | 0.9 | 3.5 | 3.3 | 2.2 | 22 | 1.8 |
| | 105 | | 5.6 | 8.3 | 8.0 | 9.4 | 9.1 | 8.2 |
| | 110 | | 14.2 | 12.6 | 10.2 | 12.5 | 103 | 9.7 |
| | 115 | | 18.6 | 16.2 | 15.8 | 15.6 | 15.0 | 14.8 |
| | 120 | | 20.1 | 21.2 | 18.3 | 18.6 | 18.5 | 18.8 |
| | 125 | | 22.1 | 22.0 | 22.0 | 22.0 | 22.0 | 22.0 |

**Table 1-b**

| | | | Com. Example 1 | Com. Example 2 | Com. Example 3 | Com. Example 4 |
|---|---|---|---|---|---|---|
| Polyester (A-1) | | (% by wt.) | 100 | 30 | 20 | |
| Polyester (B-1) | | (% by wt.) | | 70 | 80 | 100 |
| Physical properties of Film | | | | | | |
| Thickness | | (µm) | 32 | 31 | 31 | 30 |
| HZ | | (%) | 14 | 18 | 14 | 10 |
| PT | | (%) | 76 | 71 | 75 | 70 |
| Tensile Test | | | | | | |
| MD | Yield point Str. | (MPa) | 35 | 14 | 12 | 9 |
| | Yield point Elong | (%) | 18 | 16 | 15 | 16 |
| | Frac. point Str. | (MPa) | 46 | 27 | 27 | 23 |
| | Frac. point Elong | (%) | 151 | 333 | 347 | 518 |
| | Young s Modulus | (MPa) | 527 | 226 | 169 | 93 |
| TD | Yield point Str. | (MPa) | 26 | 12 | 11 | 8 |
| | Yield point Elong | (%) | 7 | 13 | 13 | 13 |
| | Frac. point Str. | (MPa) | 17 | 16 | 18 | 20 |
| | Frac. point Elong | (%) | 47 | 444 | 515 | 710 |
| | Young s Modulus | (MPa) | 724 | 202 | 153 | 104 |
| Piercing Test | | | | | | |
| Fracture point load | | (N) | 2.0 | 1.4 | 1.4 | 1.4 |
| Fracture point Elongation | | (mm) | 5.0 | 7.3 | 8.3 | 9.8 |
| Piercing-resist. destruct. energy | | (mJ) | 7.1 | 4.0 | 3.6 | 3.2 |
| Impact strength | | (mJ) | 339 | 323 | 310 | 210 |
| Heat-seal strength | Heat-seal temp. (°C) | | | | | |
| | 80 | (N/15 mm) | 0.0 | 0.0 | 0.0 | 0.0 |
| | 85 | | 0.0 | 0.1 | 0.0 | 0.0 |
| | 90 | | 0.0 | 0.1 | 0.0 | 0.0 |
| | 95 | | 0.1 | 0.3 | 0.1 | 0.0 |
| | 100 | | 0.3 | 0.8 | 0.2 | 0.1 |
| | 105 | | 2.9 | 7.8 | 5.1 | 3.2 |
| | 110 | | 9.8 | 9.1 | 8.6 | 7.1 |
| | 115 | | 15.6 | 14.2 | 14.9 | 15.7 |
| | 120 | | 21.0 | 19.1 | 19.9 | 21.5 |
| | 125 | | 22.0 | 22.0 | 22.0 | 22.0 |

**Table 2**

| | | | Example 7 | Example 8 | Com. Example 5 |
|---|---|---|---|---|---|
| Substratum layer | | | | | |
| Polyester (A-1) | | (% by weight) | 70 | 80 | 80 |
| Polyester (B-1) | | (% by weight) | 30 | 20 | 20 |
| Heat-sealable layer | | | | | |
| Polyester (A-2) | | (% by weight) | 60 | 80 | 100 |
| Poly-e-uprolactone (C-1) | | (% by weight) | 40 | 20 | 0 |

| Characteristics of Film | | | | | |
|---|---|---|---|---|---|
| Thickness | | (µm) | 51 | 51 | 49 |
| Ratio of layers | | Substratum / Heat-sealable | 40 / 60 | 40 / 60 | 40 / 60 |
| HZ | | (%) | 28 | 21 | 21 |
| PT | | (%) | 63 | 70 | 70 |
| Tensile Test | | | | | |
| MD | Yield point Str. | (MPa) | 17 | 19 | 19 |
| | Yield point Elong. | (%) | 13 | 14 | 14 |
| | Frac. point Str. | (MPa) | 33 | 32 | 32 |
| | Frac. point Elong. | (%) | 466 | 421 | 440 |
| | Young s Modulus | (MPa) | 282 | 354 | 350 |
| TD | Yield point Str. | (MPa) | 16 | 17 | 17 |
| | Yield point Elong. | (%) | 10 | 11 | 10 |
| | Frac. point Str. | (MPa) | 16 | 17 | 17 |
| | Frac. point Elong. | (%) | 74 | 11 | 11 |
| | Young s Modulus | (MPa) | 357 | 347 | 342 |
| Heat-seal strength | Heat-seal Temp. (°C) | | | | |
| | 50 | (N / 15 mm) | 0.0 | 0.0 | 0.0 |
| | 55 | | 0.1 | 0.0 | 0.0 |
| | 60 | | 0.7 | 0.2 | 0.0 |
| | 65 | | 5.8 | 0.7 | 0.0 |
| | 70 | | 11.1 | 1.0 | 0.0 |
| | 75 | | 12.3 | 1.1 | 0.0 |
| | 80 | | 13.5 | 4.0 | 0.0 |
| | 85 | | 14.5 | 7.5 | 3.5 |
| | 90 | | 15.1 | 10.2 | 6.5 |
| | 95 | | 15.1 | 14.4 | 9.8 |
| | 100 | | 15.1 | 15.2 | 12.4 |
| | 105 | | Substratum melted | 15.1 | 15.0 |
| | 110 | | | Substratum melted | Substratum melted |

## Claims

1. An aliphatic polyester composition which comprises 98~35% by weight of an aliphatic polyester copolymer (copolycondensate) (A) having a melting point (Tm) of 80 ~120°C, a crystallizing temperature (Tc) of 352~75°C, and Δ(DELTA)= (Tₘ)-(T_{C}) being within the range of 35~55°C and comprised of (a1) an aliphatic or alicyclic dicarboxylic acid component, (a2) an aliphatic or alicyclic dihydroxyl compound component, and (a3) a difunctional aliphatic hydroxycarboxylic acid component; and 2~65% by weight of an aliphatic and aromatic polyester (B) comprised of an acid component of (i) 20~95 mol% of (b1) an aliphatic or alicyclic dicarboxylic acid component and (ii) 80~5 mol% of (b2) an aromatic carboxylic acid, and a dihydroxyl component of (b3) an aliphatic and alicyclic dihydroxyl compound.

2. An aliphatic polyester composition according to claim 1, wherein the content of (a3) difunctional aliphatic hydroxycarboxylic acid component in the aliphatic polyester copolymer (A) is within the range of 0.1~25 mol%, with the proviso that among (a1) aliphatic or alicyclic dicarboxylic acid component, (a2) the aliphatic or alicyclic dihydroxyl compound component and the (a3) difunctional aliphatic hydroxycarboxylic acid component, the amounts of (a1) aliphatic or alicyclic dicarboxylic acid component and (a2) aliphatic or alicyclic dihydroxyl compound are substantially equal and the total of the amounts of (a1) aliphatic or alicyclic dicarboxylic acid component, (a2) the aliphatic or alicyclic dihydroxyl compound component and (a3) difunctional aliphatic hydroxycarboxylic acid component is 100 mol%.

3. An aliphatic polyester composition according to claim 1 or 2, wherein (b3) the difunctional aliphatic hydroxycarboxylic acid is polylactic acid.

4. A film made of the aliphatic polyester composition according to any one of the claims 1~3.

5. A multilayer film which comprises a film according to claims 4 laminated on at least one surface thereof with a heat-sealable layer of a biodegradable polymer composition comprised of 95~10% by weight of the aliphatic polyester copolymer (A) and 5 ~90% by weight of a biodegradable polymer (C) having a melting point (Tₘ) of 45~80°C.

6. A multilayer film according to claim 5, wherein the biodegradable polymer (C) is a polylactone.

7. A multilayer film according to claim 5 or 6, wherein the aliphatic polyester copolymer constituting the biodegradable polymer composition has a melting point (Tₘ) of 80 ~95°C and lower than the melting point (Tₘ) of the aliphatic polyester copolymer (A) constituting the aliphatic polyester composition.

## Patentansprüche

1. Aliphatische Polyesterzusammensetzung, umfassend 98 - 35 Gew.% eines aliphatischen Polyester-Copolymers (Copolykondensat) (A) mit einem Schmelzpunkt (Tm) von 80 - 120°C, einer Kristallisationstemperatur (Tc) von 35 - 75°C und einem Δ(DELTA) = (Tm)-(Tc), das innerhalb eines Bereichs von 35 - 55°C liegt, und umfassend (a1) eine aliphatische oder alicyclische Dicarbonsäurekomponente, (a2) eine aliphatische oder alicyclische Dihydroxylverbindungskomponente und (a3) eine difunktionelle aliphatische Hydroxycarbonsäurekomponente; und 2- 65 Gew.% eines aliphatischen und aromatischen Polyesters (B), umfassend eine Säurekomponente aus (i) 20- 95 mol-% von (b1) einer aliphatischen oder alicyclischen Dicarbonsäurekomponente und (ii) 80- 5 mol-% von (b2) einer aromatischen Carbonsäure und eine Dihydroxylkomponente aus (b3) einer aliphatischen und alicyclischen Dihydroxylverbindung.

2. Aliphatische Polyesterzusammensetzung gemäss Anspruch 1, worin der Anteil der difunktionellen aliphatischen Hydroxycarbonsäurekomponente (a3) in dem aliphatischen Polyester-Copolymer (A) innerhalb des Bereichs von 0,1 - 25 mol-% liegt, mit der Massgabe, dass in (a1) der aliphatischen oder alicyclischen Dicarbonsäurekomponente, (a2) der aliphatischen oder alicyclischen Dihydroxylverbindungskomponente und (a3) der difunktionellen aliphatischen Hydroxycarbonsäurekomponente, die Mengen von (a1) der aliphatischen oder alicyclischen Dicarbonsäurekomponente und (a2) der aliphatischen oder alicyclischen Dihydroxylverbindung im wesentlichen gleich sind und die Gesamtsumme der Mengen von (a1) der aliphatischen oder alicyclischen Dicarbonsäurekomponente, (a2) der aliphatischen oder alicyclischen Dihydroxylverbindungskomponente und (a3) der difunktionellen aliphatischen Hydroxycarbonsäurekomponente 100 mol -% beträgt.

3. Aliphatische Polyesterzusammensetzung gemäss Anspruch 1 oder 2, worin (b3) die difunktionelle aliphatische Hydroxycarbonsäure Polymilchsäure ist.

4. Folie, hergestellt aus der aliphatischen Polyesterzusammensetzung gemäß einem der Ansprüche 1 bis 3.

5. Mehrschichtfolie, umfassend eine Folie gemäß Anspruch 4, laminiert auf zumindest einer ihrer Oberflächen mit einer Heissklebeschicht aus einer biologisch abbaubaren Polymerzusammensetzung, umfassend 95 - 10 Gew.% des aliphatischen Polyester-Copolymers (A) und 5 - 90 Gew.% eines biologisch abbaubaren Polymers (C) mit einem Schmelzpunkt (Tm) von 45 - 80°C.

6. Mehrschichtfolie gemäß Anspruch 5, worin das biologisch abbaubare Polymer (C) ein Polylacton ist.

7. Mehrschichtfolie gemäß Anspruch 5 oder 6, worin das aliphatische Polyester-Copolymer, das Bestandteil der biologisch abbaubaren Polymerzusammensetzung ist, einen Schmelzpunkt (Tm) von 80 - 95°C hat und der Schmelzpunkt niedriger ist als der Schmelzpunkt (Tm) des aliphatischen Polyester-Copolymers (A), das Bestandteil der aliphatischen Polyesterzusammensetzung ist.

## Revendications

1. Composition de polyester aliphatique comprenant 98~35% en poids d'un copolymère de polyester aliphatique (copolycondensat) (A) possédant un point de fusion (Tm) de 80~120 °C, une température de cristallisation (Tc) de 35~75 °C, et Δ(DELTA) = (Tₘ)-(T_{c}) étant situé dans la plage de 35~55 °C et constitué (a1) d'un composant d'acide dicarboxylique aliphatique ou alicyclique, (a2) d'un composant de composé dihydroxyle aliphatique ou alicyclique et (a3) d'un composant d'acide hydroxycarboxylique aliphatique bifonctionnel ; et de 2~65 % en poids d'un polyester aliphatique et aromatique (B) constitué d'un composant d'acide de (i) 20~95% en moles d'un (b1) composant d'acide dicarboxylique aliphatique ou alicyclique et de (ii) 80~5 % en moles d'un (b2) acide carboxylique aromatique, et d'un composant dihydroxyle d'un (b3) composé dihydroxyle aliphatique et alicyclique.

2. Composition de polyester aliphatique selon la revendication 1, dans laquelle la teneur du (a3) composant d'acide hydroxycarboxylique aliphatique bifonctionnel dans le copolymère de polyester aliphatique (A) est situé dans la plage de 0,1~25 % en moles, à condition que parmi (a1) le composant d'acide dicarboxylique aliphatique ou alicyclique, (a2) le composant de composé dihydroxyle aliphatique ou alicyclique et (a3) le composant d'acide hydroxycarboxylique aliphatique bifonctionnel, les quantités du (a1) composant d'acide dicarboxylique aliphatique ou alicyclique et du (a2) composé dihydroxyle aliphatique ou alicyclique soient sensiblement égales et que le total des quantités du (a1) composant d'acide dicarboxylique aliphatique ou alicyclique, du (a2) composant de composé dihydroxyle aliphatique ou alicyclique et du (a3) composant d'acide hydroxycarboxylique aliphatique bifonctionnel soit égal à 100 % en moles.

3. Composition de polyester aliphatique selon la revendication 1 ou 2, dans laquelle (b3) l'acide hydroxycarboxylique aliphatique bifonctionnel est de l'acide polylactique.

4. Film constitué de la composition de polyester aliphatique selon l'une quelconque des revendications 1 à 3.

5. Film multicouches comprenant un film selon la revendication 4 stratifié sur au moins une surface de celui-ci avec une couche thermoscellable d'une composition polymère biodégradable constituée de 95~10 % en poids du copolymère de polyester aliphatique (A) et de 5~90 % en poids d'un polymère biodégradable (C) possédant un point de fusion (Tₘ) de 45~80 °C.

6. Film multicouches selon la revendication 5, dans lequel le polymère biodégradable (C) est un polylactone.

7. Film multicouches selon la revendication 5 ou 6, dans lequel le copolymère de polyester aliphatique constituant la composition polymère biodégradable possède un point de fusion (Tₘ) de 80~95 °C et inférieur au point de fusion (Tₘ) du copolymère de polyester aliphatique (A) constituant la composition de polyester aliphatique.
